# EUROPEAN PATENT APPLICATION

(11) **EP 1 775 777 A2**
(43) Date of publication of application: **18.04.2007**
(21) Application number: 06020430.2
(22) Date of filing: 28.09.2006
(51) Int. Cl.: H01L 31/042, H01L 31/048, E04D 13/18

(54) **Outer surrounding structure of photovoltaic power generation system**

(30) Priority: 17.10.2005 JP 2005301762
(71) Applicant: Nihon Teppan Co., Ltd., Chuo-ku Tokyo (JP)
(72) Inventor: Kobayashi, Haruhisa c/o Nihon Teppan Co., Ltd., Tokyo (JP); Omori, Tadaaki c/o Nihon Teppan Co., Ltd., Tokyo (JP); Miura, Masakatsu c/o Obihiro Kohan Co., Ltd., Kasaigun, Hokkaido (JP)
(74) Representative: Müller-Boré & Partner Patentanwälte

(57) **Abstract**

To improve weathering and installation performances, a photovoltaic power generation outer surrounding structure comprises a plural long fixing members (1) having protruding portions (1b) in both sides in parallel to a portion (1a) fixed onto a base material (S) of a building, an outer surrounding body (2) arranged on the base material (S) between the fixing members (1, 1) and having fixing portions (2a) extending under the protruding portions (1b) in both ends, a photovoltaic power generation panel (3), and a zipper gasket (4) having pinching and fixing portions (4ac) in both sides for holding the protruding portions (1b) and the fixing portions (2a) together, panel groves (4ab) in both sides for holding the photovoltaic power generation panel (3) and a zipper fitting groove (4aa) and a zipper body (4a) in both sides for tightening the panel grooves (4ab) by insertion of the zipper body (4a) into the groove(4aa).

## Description

### Technical Field

The present invention relates to an outer surrounding structure of a photovoltaic power generation for attaching a photovoltaic power generation panel to an outer surrounding body such as a roof, a wall or the like of a building.

### Background Art

In general, a photovoltaic power generation system is constituted by photovoltaic power generation panels provided with solar cells converting an energy of solar beam into an electric power, a connection box getting dc wires from a plurality of photovoltaic power generation panels together, and a power conditioner converting a dc power supplied from the connection box into an ac power and controlling a frequency, a voltage, a current, a phase, an output quality and the like. A plurality of photovoltaic power generation panels of the photovoltaic power generation system are generally arranged on the outer surrounding body such as the roof, the wall or the like of the building in a state in which the photovoltaic power generation panels are wired in series.

As an installation method of the photovoltaic power generation panels of the photovoltaic power generation system mentioned above, there have been widely known a method of installing the photovoltaic power generation panels via a fixing apparatus which is directly fixed to an outer surrounding body such as an existing roof or wall, or a base material such as a balk, a roofing board or the like, a method of fixedly installing the photovoltaic power generation panels formed so as to be integrally formed with the outer surrounding body such as the roof, the wall or the like to the base material, and the like.

As the fixing apparatus used for the former method of installing the photovoltaic power generation panel, for example, there are a roof fixing apparatus (for example, refer to Japanese unexamined patent publication No.2003-96987) provided with a base table which is provided with a linear rail groove having an opening portion for locking and is fixed to a roof material such as a slate or the like, a roof structure material and a balk by a screw, a nail or the like, a pressing member for pressure fixing a peripheral edge portion of a rood installation body arranged on the base table, and a fastening member movable along the rail groove and provided for fixing the pressing member while engaging with the opening portion for locking, a roof fixing apparatus (for example, refer to Japanese unexamined patent publication No.2003-253826) provided with a leg member supporting a roof installation body and having a flat portion which is approximately in parallel to a roof surface, an intermediate member which is arranged in a lower surface of a flat portion of the leg member and has a bent portion having both ends folded to a lower side, and right and left clamp pieces which are arranged in a lower surface of the intermediate member and pinch a wave form portion, fixing each of the right and left clamp pieces to the leg member and the intermediate member by a common fastening member, and limiting a movement of each of the fastened and fixed portions of the right and left clamp pieces by the bent portion of the intermediate member, a fixing apparatus (for example, refer to Japanese unexamined patent publication No.2002-9322) constituted by an elastic body in which a side groove to which an outer periphery of a solar battery panel is fitted is formed in a side surface, and an upper surface groove having an inner portion formed wider than an opening portion is formed in an upper surface, a solar battery panel holder which is provided with a zipper fitted to the upper surface groove, and a channel which has a pressure insertion portion to which a lower portion of the elastic body is pressure inserted, and a fixed portion fixed to a roofing board, and the like.

The method of installing the photovoltaic power generation panel using the fixing apparatus mentioned above is advantageous in the case that the photovoltaic power generation system is constructed in the existing building by installing the photovoltaic power generation panel later in the outer surrounding body such as the existing roof or wall or the like. However, when directly fixing the fixing apparatus mentioned above to the outer surrounding body, the fixing apparatus is directly fixed to the outer surrounding body, the base material or the like by the screw, the nail or the like, or the fixing apparatus is directly fixed to the outer surrounding body in such a manner as to pinch the convex portion or the like of the outer surrounding body by the clamp pieces of the fixing apparatus. Accordingly, a corrosion is generated in the portion in which the fixing apparatus and the outer surrounding body are brought into contact with each other, the position in which the nail or the like is driven in the outer surrounding body, the base material or the like, or the like due to a weather or a potential difference between the different metals, whereby there is generated a defect that product life cycles of the outer surrounding body, the photovoltaic generation panel and the fixing apparatus become short. In addition, a rain water enters from the position where the corrosion is generated, whereby a leak is generated, so that there is generated a defect that a weathering performance is deteriorated. Further, the building itself, the outer surrounding body or the like is vibrated due to a swing caused by a peripheral environment, a wind or the like, whereby a deformation is generated in the position where the fixing apparatus and the outer surrounding body are brought into contact with each other, the position where the nail or the like is driven in the outer surrounding body, or the like. Accordingly, there is generated a defect that the weathering performance is further deteriorated. Particularly, in the case that the fixing apparatus is directly fixed to the base material such as the balk, the roofing board or the like by the screw, the nail or the like, there is a defect that a risk of the leak generation is very high.

Further, as the latter photovoltaic power generation panel formed to be integral with the outer surrounding body such as the roof, the wall or the like, there exists a horizontally roofing roof plate (for example, refer to Japanese unexamined patent publication No.10-72910, Figs. 12 to 18) which has, for example, an upper end engagement portion and a lower end engagement portion, and in which a solar cell element is fixed to an upper surface of a roof plate base material by a sealing material and a terminal box is provided in a lower surface of the roof plate base material.

However, since it is necessary to pierce a hole portion for wiring through at least the outer surrounding body itself in each of the roof materials for putting a wiring cable for inputting and outputting an electric power converted by the solar battery therethrough to an indoor side, in the photovoltaic power generation panel formed to be integral with the outer surrounding body, the leak is generated due to the rain water intrusion from the hole portion for wiring, so that there is generated a defect that the weathering performance is deteriorated. Further, since the building itself, the outer surrounding body and the like are vibrated due to the swing caused by the peripheral environment, the wind or the like, the deformation is generated in the hole portion for wiring, so that there is generated a defect that the weathering performance is further deteriorated.

### Disclosure of the Invention

### Problem to be Solved by the Invention

An object of the present invention is to solve the defects of the prior arts and provide a novel photovoltaic power generation outer surrounding structure for attaching a photovoltaic power generation panel to an outer surrounding body such as a roof, a wall or the like of a building, in which particularly a weathering performance and a construction performance are improved especially.

### Means for Solving the Problem

As a result of devoting themselves to research for solving the problems mentioned above, the inventors of the present invention have completed the present invention by finding out the following matter. The weathering performance and the installation performance can be especially improved by using structure such that protruding portions parallel to a portion fixed onto a base material are provided in both sides over a longitudinal direction in an outdoor side of a plurality of long fixing members fixed at a predetermined interval in a perpendicular direction to a water slope direction in such a manner that a longitudinal direction becomes in parallel to the water slope direction on the base material of a building, fixing portions along an indoor side surface of the protruding portions are provided in both ends of an outer surrounding body, and a zipper gasket is provided so that the protruding portions and the fixing portions can be pinched and fixed by both side portions in the indoor side in a state of the fixing portion of the outer surrounding body being along the protruding portions of the fixing members, and the photovoltaic power generation panel can be pinched and fixed by both side portions in the outdoor side.

In other words, in accordance with the present invention, there is provided a photovoltaic power generation outer surrounding structure comprising:
a plurality of long fixing members in which protruding portions in parallel to a portion fixed onto a base material of a building are provided in both sides in an outdoor side over a longitudinal direction, and which are fixed onto the base material at a predetermined interval in a perpendicular direction to a water slope direction in such a manner that a longitudinal direction becomes in parallel to the water slope direction;
an outer surrounding body which is arranged on the base material between the fixing members, and in which fixing portions extending along an indoor side surface of the protruding portions of the fixing member are provided in both ends so as to be risen up to the fixing members;
a photovoltaic power generation panel formed such that a width is shorter than a distance between centers of adjacent the fixing members; and
a zipper gasket constituted by a gasket main body formed by a long elastic material in which a zipper fitting groove is formed in an approximately center portion in an outdoor side over a longitudinal direction, a panel groove to which a side edge portion of the photovoltaic power generation panel is inserted is formed in both side portions in the outdoor side over the longitudinal direction and a pinching and fixing portion pinching and fixing the protruding portions of the fixing members and the fixing portions of the outer surrounding body is formed in both side portions in an indoor side over the longitudinal direction respectively, and a long zipper body which is fitted into the zipper fitting groove of the gasket main body, and pinching and fixing each of side edge portions of the photovoltaic power generation panel inserted to the panel groove in the outdoor side of the fixing members by fitting the zipper body into the zipper fitting groove of the gasket main body in a state
in which the protruding portions of the fixing members and the fixing portions of the outer surrounding body are pinched and fixed by the pinching and fixing portion of the gasket main body.

Further, the following matters are also found out. If a plurality of photovoltaic power generation panels are held over the longitudinal direction of the outer surrounding body, the structure is preferable because it is possible to improve a power generation efficiency. Further, if the photovoltaic power generation panel is constituted by a photovoltaic power generation panel in which terminals for connecting to adjacent photovoltaic power generation panels are provided in the longitudinal direction of the outer surrounding body, the structure is preferable because it is possible to simplify the wiring between the photovoltaic power generation panels. Further, if the fixing portion of the outer surrounding body extends along the outdoor side of the protruding portion of the fixing member, the structure is preferable because it is possible to increase an attachment strength of the outer surrounding body.

Further, the following matters are also found out. In addition to an aspect that the fixing member is constituted by a shaped steel formed in a shape that the outdoor side is closed over the longitudinal direction, and an aspect that the fixing member is constituted by a shaped steel having an opening portion in the outdoor side over the longitudinal direction and provided with no protruding portion, and a protruding portion forming member having a portion inserted and locked to the opening portion of the shaped steel over the longitudinal direction and a portion forming the protruding portions in both sides, the fixing member can employ various aspects such as an aspect that the fixing member is constituted by a shaped steel having an opening portion in the outdoor side over the longitudinal direction, and the like. In the aspect in which the fixing member is constituted by the shaped steel having the opening portion in the outdoor side over the longitudinal direction, the shaped steel may be formed by a hat shaped steel that each of lips forming the protruding portions is fixed so as to be positioned in the outdoor side, or the shaped steel may be formed such that a width of the opening portion is shorter than a width of the portion fixed onto the base material of the building. Since it is possible to approximately select a preferable aspect among the aspects in correspondence to a condition of the field, a material or the like, an application range is wide and preferable.

Further, the following matters are also found out. If a cap member pinching the fixing portions of the outer surrounding body extending along the protruding portions in both side edge portions is arranged in the outdoor side of the fixing member, the structure is preferable because it is possible to further improve the weathering performance. Further, if a cap member having a portion extending along the protruding portions in both sides and a fitting portion fitted to the opening portion of the shaped steel is arranged in the opening portion of the shaped steel of the fixing member, the structure is preferable because a rigidity of the fixing member can be improved. Further, in the aspect that the cap member having the portion extending along the protruding portions in both sides and having the fitting portion fitted to the opening portion of the shaped steel is arranged in the opening portion of the shaped steel of the fixing member, if the cap member is constituted by a cap member pinching the fixing portions of the outer surrounding body along the protruding portions by both side edge portions, the structure is preferable because it is possible to further improve the weathering performance.

### Effect of the Invention

Since the photovoltaic power generation outer surrounding structure according to the present invention is structured such that the protruding portions parallel to the portion fixed onto the base material are provided in both sides over the longitudinal direction in the outdoor side of a plurality of long fixing members fixed at the predetermined interval in the perpendicular direction to the water slope direction in such a manner that the longitudinal direction becomes in parallel to the water slope direction on the base material of the building, the surrounding body fixed between the fixing members is arranged on the base material between the fixing members and is provided with the fixing portions risen up to the fixing member side and extending along the indoor side surface of the protruding portions of the fixing members, and the zipper gasket fixing the outer surrounding body between the fixing members and fixing the photovoltaic power generation panel between the fixing member is constituted by the gasket main body formed by the long elastic material in which the zipper fitting groove is formed in the approximately center portion in the outdoor side over the longitudinal direction, the panel groove to which the side edge portion of the photovoltaic power generation panel is inserted is formed in both side portions in the outdoor side over the longitudinal direction and the pinching and fixing portion pinching and fixing the protruding portions of the fixing members and the fixing portions of the outer surrounding body is formed in both side portions in the indoor side over the longitudinal direction respectively, and the long zipper body which is fitted into the zipper fitting groove of the gasket main body, thereby pinching and fixing each of side edge portions of the photovoltaic power generation panel inserted to the panel groove in the outdoor side of the fixing members by fitting the zipper body into the zipper fitting groove of the gasket main body in a state in which the protruding portions of the fixing members and the fixing portions of the outer surrounding body are pinched and fixed by the fixing groove of the gasket main body, the outer surrounding body is pinched and fixed between the fixing members fixed onto the base material of the building by the pinching and fixing portion of the gasket main body, and the photovoltaic power generation panel is pinched and fixed between the fixing members by the zipper gasket. Accordingly, since the outer surrounding body corresponding to the weathered portion is fixed without using any fixing device such as the screw, the nail or the like, no hole through the outer surrounding body exists. Therefore, even if the outer surrounding body is weathered for a long period, not only there is hardly a risk that the corrosion is generated in the outer surrounding body itself due to the weather and the potential difference between the different metals, but also there is no risk that the deformation is generated in the outer surrounding body itself even if the vibration is generated in the building itself, the outer surrounding body or the like due to the swing caused by the peripheral environment, the wind or the like. Accordingly, excellent durability and weather resistance can be obtained, it is possible to elongate the product life cycle of the outer surrounding body or the like, and it is possible to especially improve the weathering performance.

Further, when installing the photovoltaic power generation outer surrounding structure in accordance with the present invention, the outer surrounding body can be simply fixed onto the base material of the building and the photovoltaic power generation panel can be attached to the outer surrounding body, only by pinching and fixing the protruding portion of the fixing member and the fixing portion of the outer surrounding body by the pinching and fixing portion of the gasket main body in a state in which the fixing portions of the outer surrounding body are arranged along the indoor side surface of the protruding portions of the fixing members, thereafter inserting each of the side edge portions of the photovoltaic power generation panel to the panel groove of the gasket main body, and thereafter fitting the zipper body into the zipper fitting groove of the gasket main body. Accordingly, it is possible to especially improve an installation performance.

Further, since a space is formed between the outdoor side of the photovoltaic power generation panel and the indoor side of the outer surrounding body, it is possible to easily execute wiring for connecting the respective photovoltaic power generation panels punched and fixed between the fixing members within the space. Accordingly, it is possible to especially improve the installation performance. Further, since the wiring for connecting the photovoltaic power generation panels to each other is not exposed to the outdoor side, a design property of an outer appearance is high. Further, since the wiring itself is not directly exposed to the sun rays, the wind or the like, it is possible to prevent a deterioration. Further, since an air heat insulating layer is formed between the outdoor side and the outer surrounding body on the basis of an existence of the space, it is possible to increase a heat insulating effect of the building.

Further, if a plurality of photovoltaic power generation panels are held over the longitudinal direction of the outer surrounding body, not only it is possible to improve the power generating efficiency and the structure is preferable, but also it is possible to form the air heat insulating layer formed in the space between the indoor side of the photovoltaic power generation panel and the outdoor side of the outer surrounding body over the longitudinal direction of the outer surrounding body. Accordingly, since a heat insulating effect of the building is further increased, the structure is preferable. Further, if the photovoltaic power generation panel is constituted by the photovoltaic power generation panel provided with the terminals for connecting to the photovoltaic power generation panels adjacent to each other in the longitudinal direction of the outer surrounding body, it is possible to omit the wiring between the photovoltaic power generation panels. Accordingly, since it is possible to further improve the installation performance, the structure is preferable. Further, if the fixing portions of the outer surrounding body extend along the outdoor side of the protruding portions of the fixing members, not only it is possible to increase the attaching strength of the outer surrounding body and the structure is preferable, but also the weathering performance is improved and the structure is preferable.

Further, in addition to the aspect that the fixing member is constituted by the shaped steel formed in the shape that the outdoor side is closed over the longitudinal direction, and the aspect that the fixing member is constituted by the shaped steel having the opening portion in the outdoor side over the longitudinal direction and provided with no protruding portion and the protruding portion forming member having the portion inserted and locked to the opening portion of the shaped steel over the longitudinal direction and the portion forming the protruding portions in both sides, the fixing member can employ various aspects such as the aspect that the fixing member is constituted by the shaped steel having the opening portion in the outdoor side over the longitudinal direction, and the like. In the aspect in which the fixing member is constituted by the shaped steel having the opening portion in the outdoor side over the longitudinal direction, the shaped steel may be formed by the hat shaped steel that each of lips forming the protruding portions is fixed so as to be positioned in the outdoor side, or the shaped steel is constituted by the shaped steel formed such that the width of the opening portion is shorter than the width of the portion fixed onto the base material of the building. Accordingly, it is possible to approximately select the preferable aspect among the aspects in correspondence to the condition of the field, the material or the like.

If the cap member pinching the fixing portions of the outer surrounding body extending along the protruding portions in both side edge portions is arranged in the outdoor side of the fixing member, the structure is preferable because it is possible to further improve the weathering performance. Further, if the cap member having the portion extending along the protruding portions in both sides and the fitting portion fitted to the opening portion of the shaped steel is arranged in the opening portion of the shaped steel of the fixing member, the structure is preferable because the rigidity of the fixing member can be improved. Further, in the aspect that the cap member having the portion extending along the protruding portions in both sides and having the fitting portion fitted to the opening portion of the shaped steel is arranged in the opening portion of the shaped steel of the fixing member, if the cap member is constituted by the cap member pinching the fixing portions of the outer surrounding body along the protruding portions in both side edge portions, the structure is preferable because it is possible to further improve the weathering performance. Further, for example, in the case that the length of the zipper gasket in the longitudinal direction of the gasket main body is shorter than the length in the longitudinal direction of the pinched and fixed fixing member, and the portion where the gasket main body is not pinched and fixed exists in the fixing member, it is possible to improve the weathering performance of the portion on the basis of the cap member mentioned above, and the structure is preferable.

### Best Mode for Carrying Out the Invention

A description will be in detail given below of embodiments of a photovoltaic power generation outer surrounding structure in accordance with the present invention with reference to the accompanying drawings.

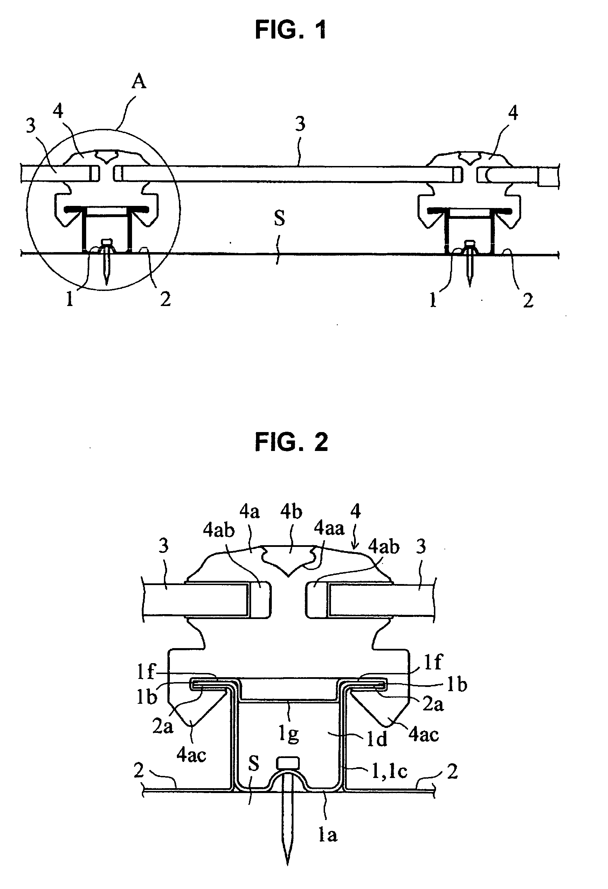

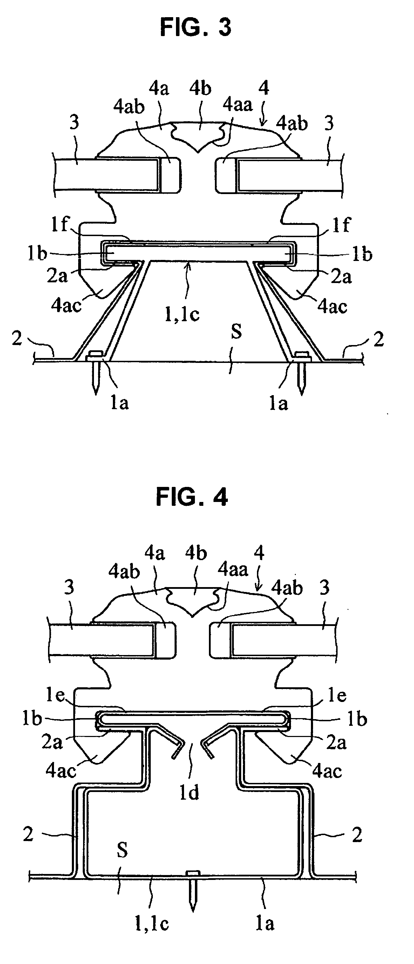

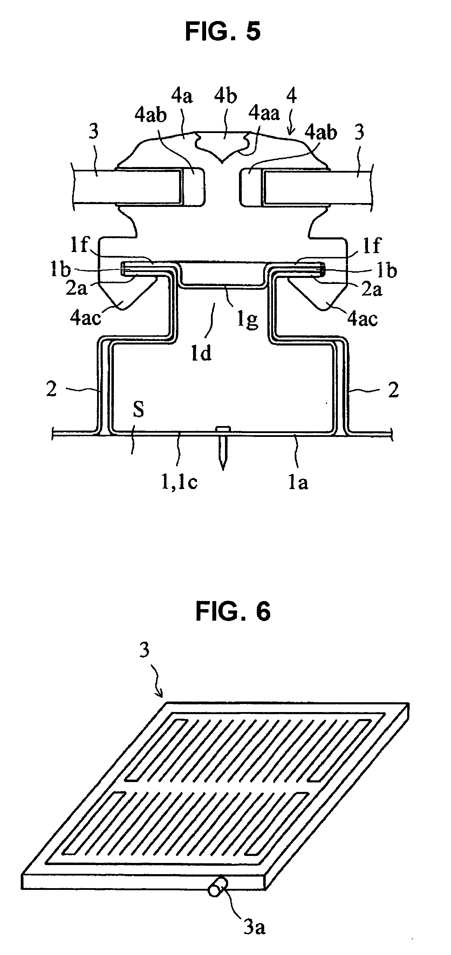

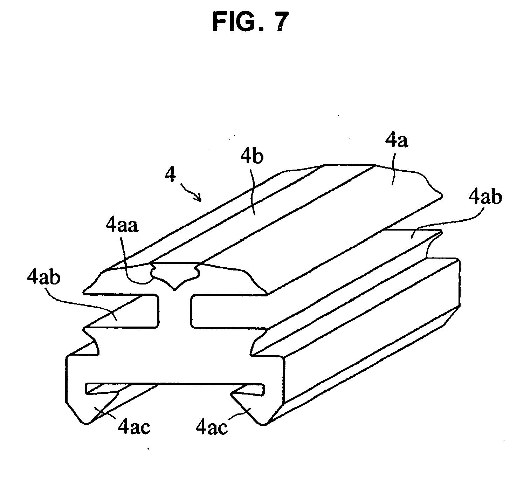

Fig. 1 is a cross sectional explanatory view showing an embodiment of a photovoltaic power generation outer surrounding structure in accordance with the present invention, Fig. 2 is an enlarged cross sectional explanatory view of a portion A in Fig. 1, Fig. 3 is an enlarged cross sectional explanatory view of a main portion showing another embodiment of the photovoltaic power generation outer surrounding structure in accordance with the present invention, Fig. 4 is an enlarged cross sectional explanatory view of a main portion showing another embodiment of the photovoltaic power generation outer surrounding structure in accordance with the present invention, Fig. 5 is an enlarged cross sectional explanatory view of a main portion showing another embodiment of the photovoltaic power generation outer surrounding structure in accordance with the present invention, Fig. 6 is a perspective explanatory view showing an example of a photovoltaic power generation panel used in the photovoltaic power generation outer surrounding structure in accordance with the present invention, and Fig. 7 is a perspective explanatory view showing an example of a zipper gasket used in the photovoltaic power generation outer surrounding structure in accordance with the present invention.

In the drawings, reference numeral 1 denotes a long fixing member which is provided with a portion 1a fixed onto a base material S such as a roofing board, a base material, an intermediate post or the like of a building and protruding portions 1b arranged in parallel to the portion 1a in both sides in an outdoor side over a longitudinal direction. A plurality of long fixing members 1 are fixed onto the base material S at a predetermined interval in a perpendicular direction to a water slope direction in such a manner that a longitudinal direction thereof is in parallel to the water slope direction. The long fixing member 1 serves for fixing an outer surrounding body 2 and a zipper gasket 4 which are mentioned below onto the base material S of the building.

In the fixing member 1, as shown in Figs. 1 to 5, the protruding portions 1b which are in parallel to the portion 1a fixed onto the base material S of the building are provided respectively in both sides in the outdoor side over the longitudinal direction. The protruding portions 1b fix the outer surrounding body 2 onto the base material S of the building by pinching and fixing the protruding portions 1b and fixing portions 2a of the outer surrounding body 2 by a pinching and fixing portion 4ac of a gasket main body 4a of the zipper gasket 4 mentioned below in a state in which the fixing portion 2a is arranged along the protruding portions 1b, and support a photovoltaic power generation panel 3 mentioned below pinched by and fixed to the zipper gasket 4. Since the protruding portions 1b exist in the fixing member 1, it is possible to fix the outer surrounding body 2 to the fixing member 1 by the zipper gasket 4 in a state in which a weathering performance is especially improved, and one zipper gasket 4 can be functioned as the fixing member of the outer surrounding body 2 and the photovoltaic power generation panel 3.

The fixing member 1 is not particularly limited as far as the protruding portions 1b which are in parallel to the portion 1a fixed onto the base material S of the building are provided respectively in both sides in the outdoor side over the longitudinal direction, and a plurality of fixing members are fixed onto the base material S at the predetermined interval in the perpendicular direction to the water slope direction in such a manner that the longitudinal direction becomes in parallel to the water slope direction. For example, in addition to an aspect that the fixing member is constituted by a shaped steel 1c formed in a shape that the outdoor side is closed over the longitudinal direction as shown in Fig. 3, and an aspect that the fixing member is constituted by a shaped steel 1c having an opening portion 1d in the outdoor side over the longitudinal direction and provided with no protruding portion 1b and a protruding portion forming member 1e having a portion inserted and locked to the opening portion 1d of the shaped steel 1c over the longitudinal direction and a portion forming the protruding portions 1b in both sides as shown in Fig. 4, there exist various aspects such as an aspect that the fixing member is constituted by a shaped steel 1c having the opening portion 1d in the outdoor side over the longitudinal direction, and the like as shown in Figs 1, 2 and 5. In the aspect in which the fixing member 1 is constituted by the shaped steel 1c having the opening portion 1d in the outdoor side over the longitudinal direction, the shaped steel 1c is formed by a hat shaped steel that each of lips forming the protruding portions 1b is formed so as to be positioned in the outdoor side as shown in Figs. 1 and 2, or the shaped steel 1c is formed such that a width of the opening portion 1d is shorter than a width of the portion 1a fixed onto the base material S of the building as shown in Fig 5. A preferable aspect can be approximately selected among the various aspects mentioned above in correspondence to a condition of the field, a material or the like.

Among them, for example, in accordance with the aspect that the fixing member 1 is constituted by the shaped steel 1c forming the shape in which the outdoor side is closed over the longitudinal direction as shown in Fig. 3, it is possible to improve a rigidity in the outdoor side of the fixing member 1 and the structure is preferable. Further, in accordance with the aspect that the fixing member 1 is constituted by the shaped steel 1c having the opening portion 1d in the outdoor side over the longitudinal direction and provided with no protruding portion 1b and the protruding portion forming member 1e having the portion inserted and locked to the opening portion 1d of the shaped steel 1c over the longitudinal direction and the portion forming the protruding portions 1b in both sides as shown in Fig. 4, if a plurality of protruding portion forming members 1e having the different shapes in correspondence to the shapes of the fixing portion 2a of the outer surrounding body 2 mentioned below and the pinching and fixing portion 4ac of the gasket main body 4a of the zipper gasket 4 are prepared, it is possible to use the outer surrounding body 2 and the zipper basket 4 having the various shapes, only by replacing the protruding portion forming member 1e, and the structure is preferable. Further, in accordance with the aspect that the fixing member 1 is constituted by the shaped steel 1c having the opening portion 1d in the outdoor side over the longitudinal direction as shown in Figs 1, 2 and 5, since the portion 1a to be fixed onto the base material S of the building can be fixed onto the base material S of the building by using the fixing device such as the screw, the nail or the like from the opening portion 1d, the installation property is improved, and the structure is preferable.

Further, in the fixing members 1 in accordance with these aspects, if a cap member 1f pinching the fixing portions 2a of the outer surrounding body 2 extending along the protruding portions 1b in both side edge portions is arranged in the outdoor side of the fixing member 1 as shown in Fig. 3, the structure is preferable because it is possible to further improve the weathering performance. Further, in the aspect that the fixing member 1 is constituted by the shaped steel 1c having the opening portion 1d in the outdoor side over the longitudinal direction, if a cap member 1f having a portion extending along the protruding portions 1b in both sides and a fitting portion 1g fitted to the opening portion 1d of the shaped steel 1c is arranged in the opening portion 1d of the shaped steel 1c of the fixing member 1 as shown in Figs. 1, 2 and 5, the structure is preferable because a rigidity of the fixing member can be improved. Further, in the aspect that the cap member 1f having the portion extending along the protruding portions 1b in both sides and having the fitting portion 1g fitted to the opening portion 1d of the shaped steel 1c is arranged in the opening portion 1d of the shaped steel 1c of the fixing member 1, if the cap member 1f is constituted by a cap member pinching the fixing portions 2a of the outer surrounding body 2 along the protruding portions 1b in both side edge portions as shown in Figs. 1 and 2, the structure is preferable because it is possible to further improve the weathering performance. Further, for example, in the case that the length in the longitudinal direction of the gasket main body 4a of the zipper gasket 4 mentioned below is shorter than the length in the longitudinal direction of the pinched and fixed fixing member 1, and the portion where the gasket main body 4a is not pinched and fixed exists in the fixing member 1, if the cap member 1f as mentioned above is provided, the structure is preferable because it is possible to improve the weathering performance.

Reference numeral 2 denotes the outer surrounding body which is arranged on the base material S between the fixing members 1 and 1, and is provided with the fixing portions 2a risen to the fixing member 1 side and extending along the indoor side surface of the protruding portion 1b of the fixing member 1 in both ends. The outer surrounding body 2 is pinched and fixed to the fixing member 1 by the zipper gasket 4 mentioned below so as to cover the outer periphery of the building such as the roof, the outer wall or the like. It is possible to easily execute wiring for connecting the photovoltaic power generation panels 3 and 3 without being exposed to the outdoor side, by forming a space between the outdoor side of the outer surrounding body 2 and the indoor side of the photovoltaic power generation panel 3 mentioned below pinched and fixed by the zipper gasket 4, and it is possible to improve a heat insulating effect by forming an air heat insulating layer in an outer side of the building.

The outer surrounding body 2 can employ anything as far as the fixing portion 2a extending along the indoor side surface of the protruding portion 1b of the fixing member 1 is provided at least in both ends thereof so as to be risen up to the fixing member 1 side. For example, the outer surrounding body 2 may be formed in a flat shape between the portion risen up to the fixing member 1 side in both ends as shown in Figs. 1 to 5, or may be formed in a folded plate shape (not shown).

Further, if the fixing portion 2a of the outer surrounding body 2 extends along the outdoor side of the protruding portion 1b of the fixing member 1 as shown in Fig. 3, not only the structure is preferable because it is possible to increase the attaching strength of the outer surrounding body 2, but also the structure is preferable because the weathering performance is improved.

Reference numeral 3 denotes the photovoltaic power generation panel in which the width is formed shorter than the distance between the centers of the adjacent fixing members 1. The photovoltaic power generation panel 3 serves for converting a solar energy into an electric power.

The photovoltaic power generation panel 3 is constituted by a general structure provided with a solar battery converting the solar energy into the electric power, and is not particularly limited as far as at least the width thereof is formed shorter than the distance between the centers of the adjacent fixing members 1 so as to be pinched and fixed between the fixing members 1 and 1 by the zipper gasket 4 mentioned below pinching and fixing the protruding portion 1b of the fixing member 1 and the fixing portion 2a of the outer surrounding body 2. However, in the case that a plurality of photovoltaic power generation panels 3 are held over the longitudinal direction of the outer surrounding body 2, if the photovoltaic power generation panel 3 shown in Fig. 6 is constituted by a photovoltaic power generation panel provided with terminals 3a for connecting to the adjacent photovoltaic power generation panels 3 in the longitudinal direction of the outer surrounding body 2, it is possible to omit the wiring between the photovoltaic power generation panels 3 and 3. Accordingly, since it is possible to further improve the installation performance, the structure is preferable.

In other words, the general photovoltaic power generation panel 3 is structured such that a wiring cable for inputting and outputting the electric power converted in the solar battery protrudes from a back surface side thereof, and the wiring is executed by connecting the wiring cable protruding from the back surface side or the like to the wiring cable or the like of the adjacent photovoltaic power generation panel 3 at a time of the installation. However, since it is necessary to connect the wiring cables or to make covering for improving a waterproof within the space formed between the indoor side of the photovoltaic power generation panel 3 and the outdoor side of the outer surrounding body 2 in case of the wiring cable of the general photovoltaic power generation panel 3 as mentioned above, the installation performance is very bad. On the contrary, in the photovoltaic power generation panel 3 provided with the terminals 3a mentioned above, since the convex terminal 3a protrudes in the longitudinal direction of the outer surrounding body 2 and the concave terminal 3a engaging with the convex terminal 3a is provided in the opposite side, for example, as shown in Fig. 6, it is possible to easily execute the wiring between the photovoltaic power generation panels 3 and 3 only by fitting the terminal 3a of the photovoltaic power generation panel 3 to be installed to the terminal 3a of the adjacent photovoltaic power generation panel 3 so as to be engaged at a time of the installation. Accordingly, since it is possible to further improve the installation property, the structure is preferable.

Reference numeral 4 denotes the zipper gasket. The zipper gasket 4 is constituted by a gasket main body 4a formed by a long elastic material in which a zipper fitting groove 4aa is formed in an approximately center portion in the outdoor side over the longitudinal direction, a panel groove 4ab to which a side edge portion of the photovoltaic power generation panel 3 is inserted is formed in both side portions in the outdoor side over the longitudinal direction and a pinching and fixing portion 4ac pinching and fixing the protruding portions 1b of the fixing members 1 and the fixing portions 2a of the outer surrounding body 2 is formed in both side portions in the indoor side over the longitudinal direction respectively, and a long zipper body 4b which is fitted into the zipper fitting groove 4aa of the gasket main body 4a, and pinching and fixing each of side edge portions of the photovoltaic power generation panel 3 inserted to the panel groove 4ab in the outdoor side of the fixing members 1 by fitting the zipper body 4b into the zipper fitting groove 4aa of the gasket main body 4a in a state in which the protruding portions 1b of the fixing members 1 and the fixing portions 2a of the outer surrounding body 2 are pinched and fixed by the pinching and fixing portion 4ac of the gasket main body 4a. The zipper gasket 4 serves for pinching and fixing the outer surrounding body 2 to the fixing members 1 in a state in which the weathering performance is good, that is, no hole through the fixing members 1 or the outer surrounding body 2 exists in the outdoor side thereof, the screw, the nail or the like is not exposed and the end portion of the outer surrounding body 2 is tightly attached to the fixing members 1, pinching and fixing the photovoltaic power generation panel 3 between the fixing members 1 and 1, and insulating between the fixing member 1 and the outer surrounding body 2, and the photovoltaic power generation panel 3, thereby preventing the corrosion from being generated due to the potential difference between the different metals.

In the gasket main body 4a of the zipper gasket 4, the zipper fitting groove 4aa is formed in the approximately center portion in the outdoor side over the longitudinal direction, and the panel groove 4ab to which the side edge portion of the photovoltaic power generation panel 3 is inserted is formed in both side portions in the outdoor side over the longitudinal direction as shown in Fig. 7. In the state in which the zipper body 4b is not fitted into the zipper fitting groove 4aa of the gasket main body 4a, the portions in the outdoor side positioned in both sides of the zipper fitting groove 4aa of the gasket main body 4a can be deformed in a direction narrowing the width of the zipper fitting groove 4aa. Accordingly, when inserting the side edge portions of the photovoltaic power generation panel 3 to the respective panel grooves 4ab and 4ab of the gasket main body 4a, it is possible to easily insert the side edge portion of the photovoltaic power generation panel 3 by enlarging the widths of the respective panel grooves 4ab and 4ab.

If the zipper body 4b is fitted into the zipper fitting groove 4aa of the gasket main body 4a by using a special tool or the like in a state in which the side edge portions of the photovoltaic power generation panel 3 is inserted to the respective panel grooves 4ab and 4ab of the gasket main body 4a as mentioned above, a strong pressing force is applied to the zipper fitting groove 4aa in the direction narrowing the widths of the respective panel grooves 4ab and 4ab of the gasket main body 4a via the portions in both sides of the zipper fitting groove 4aa while being expanded in the width. Accordingly, the side edge portions of the photovoltaic power generation panel 3 inserted to the respective panel grooves 4ab and 4ab of the gasket main body 4a are strongly pinched.

Further, the zipper gasket 4 is structured as to strongly pinch each of the side edge portions of the photovoltaic power generation panels 3 inserted to the panel grooves 4ab and 4ab of the gasket main body 4a by simply fitting the zipper body 4b into the zipper fitting groove 4aa of the gasket main body 4a without using the adhesive agent, the fixing screw or the like. Accordingly, for example, in the case that it is desired to detach the photovoltaic power generation panel 3 at a time of maintaining, inspecting, replacing the photovoltaic power generation panel 3, or the like, it is possible to easily detach the photovoltaic power generation panel 3 only by taking out the zipper body 4b fitted into the zipper fitting groove 4aa of the gasket main body 4a from the zipper fitting groove 4aa by using the special tool or the like.

As the gasket main body 4a and the zipper body 4b of the zipper gasket 4, any shape can be employed as far as at least the respective panel grooves 4ab and 4ab of the gasket main body 4a, as shown in Figs. 1 to 5 and 7, can respectively insert the side edge portions of the photovoltaic power generation panels 3, and can strongly pinch the side edge portions of the photovoltaic power generation panels 3 at a time of fitting the zipper body 4b into the zipper fitting groove 4aa of the gasket main body 4a.

Further, the pinching and fixing portion 4ac pinching and fixing the protruding portion 1b of the fixing member 1 and the fixing portion 2a of the outer surrounding body 2 in both side portions in the indoor side over the longitudinal direction thereof as shown in Fig. 7 is formed in the gasket main body 4a of the zipper gasket 4, and the pinching and fixing portion 4ac is structured, as shown in Figs. 1 to 5, such as to pinch and fix the protruding portion 1b of the fixing member 1 and the fixing portion 2a of the outer surrounding body 2, and seal the portion between the fixing member 1 and the outer surrounding body 2 in such a manner as to prevent the rain water or the like from entering into the indoor side of the fixing member 1 and the indoor side of the outer surrounding body 2.

As the pinching and fixing portion 4ac of the gasket main body 4a of the zipper gasket 4, any shape can be employed as far as the pinching and fixing portion pinches and fixes the protruding portions 1b of the fixing members 1 and the fixing portions 2a of the outer surrounding body 2 in both side portions in the indoor side over the longitudinal direction. For example, the pinching and fixing portion 4ac as shown in Figs. 1 to 5 and 7 is formed in such a shape that the grooves formed in the concave shape toward the center line side of the gasket main body 4a so as to enwrap the protruding portions 1b of the fixing members 1 and the fixing portions 2a of the outer surrounding body 2 along the protruding portions 1b are formed in both side edge sides. When pinching and fixing the protruding portions 1b of the fixing members 1 and the fixing portions 2a of the outer surrounding body 2 by the pinching and fixing portions 4ac, the protruding portion 1b of one fixing member 1 and the fixing portion 2a of the outer surrounding body 2 are pinched to one groove of the pinching and fixing portions 4ac in a state in which the fixing portion 2a of the outer surrounding body 2 is arranged along the indoor surface side of the protruding portion 1b of the fixing member 1, and the protruding portion 1b of the other fixing member 1 in a state in which the fixing portion 2a of the outer surrounding body 2 is arranged along the indoor surface side of the protruding portion 1b of the fixing member 1 is thereafter pinched by deforming the other groove of the pinching and fixing portion 4ac by a paddle, the special tool or the like in such a manner as to expand the width thereof, that is, move the lower end side of the pinching and fixing portion 4ac apart from the center line of the gasket main body 4a.

As mentioned above, since the zipper gasket 4 is structured such as to firmly pinch and fix the photovoltaic power generation panel 3 by the gasket main body 4a and the zipper body 4b, and pinch and fix the fixing portions 2a of the outer surrounding body 2 to the protruding portions 1b of the fixing members 1 in such a manner as to prevent the rain water from entering into the indoor side of the fixing members 1 and the indoor side of the outer surrounding body 2 by the pinching and fixing portion 4ac of the gasket main body 4a, it is possible to insulate between the fixing member 1 and the outer surrounding body 2, and the photovoltaic power generation panel 3 so as to prevent the corrosion due to the potential difference between the different metals from being generated, and it is possible to easily install. The material of the zipper gasket 4 is not particularly limited as far as at least the gasket main body 4a is constituted by the long elastic material, however, as the material of the gasket main body 4a and the zipper body 4b, it is preferable to employ a thermoplastic elastomer such as a styrene, olefin or the like, a synthetic rubber such as a diene, organic silicon compound or the like, a natural rubber and the like.

Next, a description will be given of an installation method of the photovoltaic power generation outer surrounding structure in accordance with the present invention having the structure mentioned above.

First, there is executed an operation of fixing a plurality of long fixing members 1, in which the protruding portions 1b in parallel to the portion 1a fixed to the base material S of the building are respectively provided in both sides in the outdoor side over the longitudinal direction, onto the base material S at the predetermined interval in the perpendicular direction to the water slope direction in such a manner that the longitudinal direction become in parallel to the water slope direction.

The operation is executed so as to fix a plurality of fixing members 1 onto the base material S at the predetermined interval in the perpendicular direction to the water slope direction in such a manner that the longitudinal direction become in parallel to the water slope direction in accordance with the generally employed method. In particular, for example, in the case that the fixing member 1 is constituted by the shaped steel 1c formed in the shape in which the outdoor side is closed over the longitudinal direction, as shown in Fig. 3, it is sufficient that the portion 1a fixed onto the base material S of the building is fixed onto the base material S by the nail, the screw or the like. Further, in the case that the fixing member 1 is constituted by the shaped steel 1c having the opening portion 1d in the outdoor side over the longitudinal direction and provided with no protruding portion 1b and the protruding portion forming member 1e having the portion inserted and locked to the opening portion 1d of the shaped steel 1c over the longitudinal direction and the portion forming the protruding portions 1b in both sides, the portion 1a fixed onto the base material S of the building is first fixed onto the base material S of the building by the fixing device such as the nail, the screw or the like from the opening portion 1d of the shaped steel 1c, and the portion in which the shaped steel 1c of the protruding portion forming member 1e is inserted and locked to the opening portion 1d of the shaped steel 1c (the tapered portion formed in the lower side of the protruding portion forming member 1e in Fig. 4) is thereafter inserted.

Further, as shown in Figs. 1, 2 and 5, in the case that the fixing member 1 is constituted by the shaped steel 1c having the opening portion 1d in the outdoor side over the longitudinal direction, it is sufficient that the portion 1a fixed onto the base material S of the building is fixed by the fixing device such as the nail, the screw or the like from the opening portion 1d of the shaped steel 1c. In the aspect that the fixing member 1 is constituted by the shaped steel 1c having the opening portion 1d in the outdoor side over the longitudinal direction, in the case that the cap member 1f having the portions extending along the protruding portions 1b in both sides and having the fitting portion 1g fitted to the opening portion 1d of the shaped steel 1c is arranged in the opening portion 1d of the shaped steel 1c of the fixing member 1 as shown in Fig. 5, it is sufficient that the fitting portion 1g of the cap member 1f is fitted to the opening portion 1d of the shaped steel 1c after fixing the shaped steel 1c onto the base material S of the building.

Next, there is executed an operation of arranging the outer surrounding body 2 provided with the fixing members 2a extending along the protruding portions 1b of the fixing members 1 so as to be risen up to the fixing members 1 side in both ends on the base material S between the fixing members 1 and 1.

The operation is executed by arranging the outer surrounding body 2 on the base material S between the fixing members 1 and 1 such that the respective fixing portions 2a of the outer surrounding body 2 are arranged along the protruding portions 1b of the respective fixing members 1 as shown in Figs. 1 to 6.

At this time, in the case that the fixing member 2a of the outer surrounding body 2, as shown in Fig. 3, is formed in the shape extending along the outdoor side of the protruding portion 1b of the fixing member 1, it is sufficient that the fixing portion 2a of the outer surrounding body 2 is bent from the indoor side of the protruding portion 1b of the fixing member 1 to the outdoor side along them so as to arrange the outer surrounding body 2 on the base material S between the fixing members 1 and 1.

Further, at this time, in the case that the cap member 1f pinching the fixing portions 2a of the outer surrounding body 2 extending along the protruding portions 1b in both side edge portions is arranged in the outdoor side of the fixing members 1 as shown in Fig. 3, the fixing portions 2a of the outer surrounding body 2 extending along the protruding portions 1b in both side edge portions may be pinched by arranging the outer surrounding body 2 on the base material S between the fixing members 1 and 1 in such a manner that the respective fixing portions 2a of the outer surrounding body 2 are arranged along the protruding portions 1b of the respective fixing members 1, then mounting the cap member 1f in the outdoor side of the fixing members 1, and thereafter caulking or lock seaming both side edge portions of the cap member 1f. Further, in the case that the fixing member 1 is constituted by the shaped steel 1c having the opening portion 1d in the outdoor side over the longitudinal direction, the cap member 1f having the portion extending along the protruding portions 1b in both sides and having the fitting portion 1g fitted to the opening portion 1d of the shaped steel 1c is arranged in the opening portion 1d of the shaped steel 1c of the fixing member 1, and the cap member 1f is constituted by a cap member pinching the fixing portions 2a of the outer surrounding body 2 extending along the protruding portion 1b in both side edge portions as shown in Fig. 2, the protruding portions 1b of the fixing members 1 and the fixing portions 2a of the outer surrounding body 2 may be pinched in both side edge portions by arranging the outer surrounding body 2 on the base material S between the fixing members 1 and 1 in such a manner that the respective fixing portions 2a of the outer surrounding body 2 are arranged along the protruding portions 1b of the respective fixing members 1, then fitting the fitting portion 1g of the cap member 1f to the opening portion 1d of the shaped steel 1c, and thereafter caulking or lock seaming both side edge portions of the cap member 1f.

Next, there is executed an operation of fixing the outer surrounding body 2 between the fixing members 1 by pinching and fixing the protruding portions 1b of the fixing members 1 and the fixing portions 2a of the outer surrounding body 2 extending along the protruding portion 1b by the pinching and fixing portions 4ac of the gasket main body 4a of the zipper gasket 4.

This operation is executed particularly as follows. For example, in the case that the pinching and fixing portion 4ac of the gasket main body 4a of the zipper gasket 4 is formed in such a shape that the grooves each formed in the concave shape toward the center line side of the gasket main body 4a are formed in both side edge sides so as to enwrap the protruding portions 1b of the fixing members 1 and the fixing portions 2a of the outer surrounding body 2 extending along the protruding portions 1b as shown in Figs. 1 to 5 and 7, the operation is executed by pinching the protruding portions 1b of one fixing member 1 and the fixing portions 2a of the outer surrounding body 2 to one groove of the pinching and fixing portions 4ac in a state in which the fixing portions 2a of the outer surrounding body 2 are arranged along the indoor surface side of the protruding portions 1b of the fixing members 1, and thereafter deforming the other groove of the pinching and fixing portions 4ac by the paddle, the special tool or the like in such a manner as to expand the width thereof, that is, move the lower end side of the pinching and fixing portion 4ac apart from the center line of the gasket main body 4a, thereby pinching the protruding portions 1b of the other fixing member 1 in a state in which the fixing portions 2a of the outer surrounding body 2 are arranged along the indoor surface side of the protruding portions 1b of the fixing members 1.

Next, in the case that the zipper body 4b is previously fitted into the zipper fitting groove 4aa of the gasket main body 4a of the zipper gasket 4, there is executed an operation of taking out the zipper body 4b fitted into the zipper fitting groove 4aa from the zipper fitting groove 4aa.

This operation may be executed by using the special tool or the like. However, since the groove 4ab for the installation portion or the panel groove 4ab in the gasket main body 4a is in a state in which nothing is inserted thereto, it is possible to easily take out the zipper body 4b generally by hand. Further, this operation may be previously executed in a preliminary step, however, it is necessary to execute the operation at least before executing an operation of inserting the side edge portions of the respective photovoltaic power generation panels 3 and 3 to the respective panel grooves 4ab which is mentioned below.

Next, there is executed an operation of respectively inserting the side edge portions of the photovoltaic power generation panels 3 and 3 to the respective panel grooves 4ab of the gasket main body 4a of the zipper gasket 4.

This operation is executed by inserting the photovoltaic power generation panels 3 to the respective panel grooves 4ab of the zipper gasket 4 one by one. Particularly, for example, when first inserting the side edge portion of the photovoltaic power generation panel 3 to one panel groove 4ab, there is sequentially executed the operation of fitting one side edge portion of the photovoltaic power generation panel 3 to one panel groove 4ab, and thereafter inserting the other side edge portion of the photovoltaic power generation panel 3 to the expanded panel groove 4ab in such a manner as to expand the panel groove 4ab of the zipper gasket 4 facing to one panel groove 4ab so as to expand the opening portion 1d, with respect to each of the facing zipper gaskets 4.

At this time, since the zipper body 4b is not fitted into the zipper fitting groove 4aa of the gasket main body 4a, the portions in both sides of the zipper fitting groove 4aa of the gasket main body 4a can respectively broaden the widths of the panel grooves 4ab of the gasket main body 4a by deforming the width of the zipper fitting groove 4aa in the narrowing direction. Accordingly, it is possible to easily insert the side edge portion of the photovoltaic power generation panel 3.

Further, at this time, for example, in the case that the photovoltaic power generation panel 3 is not pinched and fixed to the zipper gasket 4, for example, due to a budget or a peripheral sunlight irradiation condition, it is preferable to insert a decorative laminated sheet in place of the photovoltaic power generation panel 3 to the panel grooves 4ab of the gasket main body 4a. Further, if the decorative laminated sheet employs a decorative laminated sheet in which a surface in the outdoor side of the decorative laminated sheet is made flush with the outdoor side surface of the photovoltaic power generation panel 3 (which is pinched and fixed to a right side of the zipper gasket 4 in a right side in Fig. 1) at a time of the installation, as shown in Fig. 1, a design property after the installation is improved, and the structure is preferable.

Finally, there is executed an operation of fixing the photovoltaic power generation panel 3 between the fixing members 1 and 1, by fitting the zipper body 4b into the zipper fitting groove 4aa of the gasket main body 4a in a state in which the side edge portions of the respective photovoltaic power generation panels 3 and 3 are inserted to the respective panel grooves 4ab of the gasket main body 4a of the zipper gasket 4, thereby strongly pinching the side edge portions of the photovoltaic power generation panels 3 inserted to the respective panel grooves 4ab.

This operation is particularly executed by fitting the zipper body 4b into the zipper fitting groove 4aa of the gasket main body 4a by using the special tool or the like, in a state in which the side edge portions of the respective photovoltaic power generation panels 3 and 3 are inserted to the respective penal grooves 4ab and 4ab of the gasket main body 4a.

At this time, if the zipper body 4b is fitted into the zipper fitting groove 4aa of the gasket main body 4a in a state in which the side edge portions of the photovoltaic power generation panels 3 and 3 are respectively inserted to the respective panel grooves 4ab and 4ab of the gasket main body 4a, the strong pressing force is applied in the direction of narrowing the width of the respective panel grooves 4ab and 4ab of the gasket main body 4a via the portions in both sides of the zipper fitting groove 4aa in accordance that the width of the zipper fitting groove 4aa is expanded. Accordingly, the side edge portions of the respective photovoltaic power generation panels 3 and 3 inserted to the respective panel grooves 4ab and 4ab are respectively strongly pinched and fixed.

Accordingly, the wiring or the like between the photovoltaic power generation panels 3 and 3 may be executed by utilizing the space formed between the indoor side of the photovoltaic power generation panel 3 and the outdoor side of the outer surrounding body 2, after installing the photovoltaic power generation outer surrounding structure in accordance with the present invention.

## Claims

1. A photovoltaic power generation outer surrounding structure comprising:
a plurality of long fixing members (1) in which protruding portions (1b) in parallel to a portion (1a) fixed onto a base material (S) of a building are provided in both sides in an outdoor side over a longitudinal direction, and which are fixed onto said base material (S) at a predetermined interval in a perpendicular direction to a water slope direction in such a manner that a longitudinal direction becomes in parallel to the water slope direction;
an outer surrounding body (2) which is arranged on said base material (S) between said fixing members (1, 1), and in which fixing portions (2a) extending along an indoor side surface of the protruding portions (1b) of said fixing member (1) are provided in both ends so as to be risen up to said fixing members (1) ;
a photovoltaic power generation panel (3) formed such that a width is shorter than a distance between centers of adjacent said fixing members (1); and
a zipper gasket (4) constituted by a gasket main body (4a) formed by a long elastic material in which a zipper fitting groove (4aa) is formed in an approximately center portion in an outdoor side over a longitudinal direction, a panel groove (4ab) to which a side edge portion of said photovoltaic power generation panel (3) is inserted is formed in both side portions in the outdoor side over the longitudinal direction and a pinching and fixing portion (4ac) pinching and fixing the protruding portions (1b) of said fixing members (1) and the fixing portions (2a) of said outer surrounding body (2) is formed in both side portions in an indoor side over the longitudinal direction, respectively, and a long zipper body (4b) which is fitted into the zipper fitting groove (4aa) of said gasket main body (4a), and pinching and fixing each of side edge portions of said photovoltaic power generation panel (3) inserted to the panel groove (4ab) in the outdoor side of said fixing members (1) by fitting said zipper body (4b) into the zipper fitting groove (4aa) of said gasket main body (4a) in a state in which the protruding portions (1b) of said fixing members (1) and the fixing portions (2a) of said outer surrounding body (2) are pinched and fixed by the pinching and fixing portion (4ac) of said gasket main body (4a).

2. A photovoltaic power generation outer surrounding structure as claimed in claim 1, wherein a plurality of photovoltaic power generation panels (3) are held over the longitudinal direction of the outer surrounding body (2).

3. A photovoltaic power generation outer surrounding structure as claimed in claim 2, wherein the photovoltaic power generation panel (3) is constituted by a photovoltaic power generation panel in which terminals (3a) for connecting to adjacent photovoltaic power generation panels (3) are provided in the longitudinal direction of the outer surrounding body (2).

4. A photovoltaic power generation outer surrounding structure as claimed in any one of claims 1 to 3, wherein the fixing portion (2a) of the outer surrounding body (2) extends along the outdoor side of the protruding portion (1b) of the fixing member (1).

5. A photovoltaic power generation outer surrounding structure as claimed in any one of claims 1 to 4, wherein the fixing member (1) is constituted by a shaped steel (1c) formed in a shape that the outdoor side is closed over the longitudinal direction.

6. A photovoltaic power generation outer surrounding structure as claimed in any one of claims 1 to 4, wherein the fixing member (1) is constituted by a shaped steel (1c) having an opening portion (1d) in the outdoor side over the longitudinal direction and provided with no protruding portion (1b), and a protruding portion forming member (1e) having a portion inserted and locked to the opening portion (1d) of the shaped steel (1c) over the longitudinal direction and a portion forming the protruding portions (1b) in both sides.

7. A photovoltaic power generation outer surrounding structure as claimed in any one of claims 1 to 4, wherein the fixing member (1) is constituted by a shaped steel (1c) having an opening portion (1d) in the outdoor side over the longitudinal direction.

8. A photovoltaic power generation outer surrounding structure as claimed in claim 7, wherein the shaped steel (1c) is formed by a hat shaped steel that each of lips forming the protruding portions (1b) is fixed so as to be positioned in the outdoor side.

9. A photovoltaic power generation outer surrounding structure as claimed in claim 7, wherein the shaped steel (1c) is constituted by a shaped steel which is formed such that a width of the opening portion (1d) is shorter than a width of the portion (1a) fixed onto the base material (S) of the building.

10. A photovoltaic power generation outer surrounding structure as claimed in any one of claims 5 to 9, wherein a cap member (1f) pinching the fixing portions (2a) of the outer surrounding body (2) extending along the protruding portions (1b) in both side edge portions is arranged in the outdoor side of the fixing member (1).

11. A photovoltaic power generation outer surrounding structure as claimed in any one of claims 7 to 9, wherein a cap member (1f) having a portion extending along the protruding portions (1b) in both sides and a fitting portion (1g) fitted to the opening portion (1d) of said shaped steel (1c) is arranged in the opening portion (1d) of the shaped steel (1c) of the fixing member (1).

12. A photovoltaic power generation outer surrounding structure as claimed in claim 11, wherein the cap member (1f) is constituted by a cap member pinching the fixing portions (2a) of the outer surrounding body (2) along the protruding portions (1b) by both side edge portions.
